# EUROPEAN PATENT APPLICATION

(11) **EP 4 831 716 A1**
(43) Date of publication of application: **28.10.2026**
(21) Application number: 24905923.9
(22) Date of filing: 11.11.2024
(51) Int. Cl.: G02B 27/00

(54) **FILTER-BASED ACHROMATIC OPTICAL DEVICE, AND MANUFACTURING METHOD THEREFOR AND APPLICATION THEREOF**

(30) Priority: 22.12.2023 CN 202311786261; 29.12.2023 CN 202311860298
(71) Applicant: Zju-hangzhou Global Scientific And Technological Innovation Center, Hangzhou, Zhejiang 311200 (CN); Sunny Optical (Zhejiang) Research Institute Co., Ltd., Hangzhou, Zhejiang 311200 (CN)
(72) Inventor: SHI, Jianru, Hangzhou, Zhejiang 311200 (CN); QIN, Xiaoxia, Hangzhou, Zhejiang 311200 (CN); CHEN, Tiantong, Hangzhou, Zhejiang 311200 (CN); HAO, Xiying, Hangzhou, Zhejiang 311200 (CN); LU, Fei, Hangzhou, Zhejiang 311200 (CN); CHEN, Zhangmin, Hangzhou, Zhejiang 311200 (CN); ZHANG, Benhao, Hangzhou, Zhejiang 311200 (CN); GONG, Yanyun, Hangzhou, Zhejiang 311200 (CN)
(74) Representative: Petraz, Gilberto Luigi
(86) International application number: PCT/CN2024/131185
(87) International publication number: WO 2025/130436

(57) **Abstract**

A filtering-based achromatic optical device, a method for manufacturing the same, and an application thereof are provided. The filtering-based achromatic optical device includes a filter layer and a light deflection device. The filter layer includes a plurality of combined pixels each including a plurality of monochromatic sub-pixels arranged adjacently. Each of the monochromatic sub-pixels is configured to selectively transmit monochromatic light of a corresponding color and absorb light of other colors. The light deflection device is attached to a surface of the filter layer and includes a plurality of sub-light deflection devices in one-to-one correspondence with positions of the plurality of monochromatic sub-pixels. Each of the sub-light deflection devices is configured to adjust a propagation direction of the monochromatic light from a corresponding one of the plurality of monochromatic sub-pixels, so as to direct the monochromatic light to a designated position.

## Description

### CROSS-REFERENCE TO RELATED APPLICATIONS

This application claims priority to Chinese patent application No. 202311860298.9, filed on December 29, 2023, and titled "FILTER-BASED ACHROMATIC OPTICAL DEVICE, OPTICAL LENS, AND IMAGING ASSEMBLY", and Chinese patent application No. 202311786261.6, filed on December 22, 2023, and titled "FILTERING-BASED ACHROMATIC PROGRAMMABLE OPTICAL DEVICE, METHOD FOR MANUFACTURING THE SAME, AND APPLICATION THEREOF". The contents of the above identified applications are hereby incorporated herein in their entireties by reference.

### TECHNICAL FIELD

The present application relates to the technical field of imaging, and in particular, to a filtering-based achromatic optical device, a method for manufacturing the same, and an application thereof.

### BACKGROUND

Most conventional refractive optical devices achieve a specific phase distribution by constructing curved surface profiles. However, such devices are generally large in volume and weight. With technological development and progress, binary optics based on diffraction theory (i.e., diffractive optical devices) can achieve planarization of optical devices to a certain extent, which is not only beneficial to reducing the volume and weight of the devices, but also utilizes chromatic dispersion characteristics complementary to those of conventional refractive optical devices to cancel chromatic dispersion to a certain degree, thereby holding great potential for application scenarios in optical imaging.

Nevertheless, in the conventional imaging field, a conventional achromatic method involves combining a diffractive optical device and a refractive optical device. However, since an Abbe number of a PB optic and that of a refractive optic often differ significantly, the chromatic aberration is difficult to cancel completely. Related technologies have proposed using inherent properties of liquid crystal optics to compensate for chromatic dispersion. However, strong limitations on wavelengths of red, green, and blue light are imposed by this approach, for example, a half-wave plate (HWP) is required to only act on blue light without affecting handedness of red and green light. Such conditions are difficult to satisfy, and thus the approach can only be applied in special scenarios. Even if the above conditions are satisfied, a blue-light HWP would cause new problems for red and green light, such as low diffraction efficiency.

Therefore, conventional optical devices in the current technology often exhibit strong dispersion effects, and conventional techniques for eliminating dispersion are often complex and ineffective, which seriously impact the accuracy of the optical devices during imaging.

### SUMMARY

According to various embodiments of the present application, a filtering-based achromatic optical device, a method for manufacturing the same, and an application thereof are provided. The filtering-based achromatic optical device may be implemented as a filter-based achromatic optical device, or may be implemented as a filtering-based achromatic programmable optical device.

According to an aspect of the present application, a filtering-based achromatic optical device is provided in the present application. The filtering-based achromatic optical device includes a filter layer and a light deflection device;
the filter layer includes a plurality of combined pixels, and each of the plurality of combined pixels includes a plurality of monochromatic sub-pixels arranged adjacently. Each of the plurality of monochromatic sub-pixels is configured to selectively transmit monochromatic light of a corresponding color and absorb light of other colors;
the light deflection device is attached to a surface of the filter layer and includes a plurality of sub-light deflection devices in one-to-one correspondence with positions of the plurality of monochromatic sub-pixels, and each of the plurality of sub-light deflection devices is configured to adjust a propagation direction of the monochromatic light from a corresponding one of the plurality of monochromatic sub-pixels, so as to direct the monochromatic light to a designated position.

In an embodiment of the present application, the light deflection device includes at least one of a micro-prism, a grating, a transmissive holographic optical device, or a metasurface device.

In an embodiment of the present application, the grating includes at least one of a relief grating or a Pancharatnam-Berry (PB) grating.

In an embodiment of the present application, the plurality of monochromatic sub-pixels corresponding to a same combined pixel among the plurality of combined pixels are of different light transmission types, and are configured to transmit light of different monochromatic colors, respectively.

In an embodiment of the present application, the filter layer is configured as an RGB filter layer; each of the plurality of combined pixels in the RGB filter layer includes a red sub-pixel configured to selectively transmit red light, a green sub-pixel configured to selectively transmit green light, and a blue sub-pixel configured to selectively transmit blue light.

In an embodiment of the present application, each of the plurality of monochromatic sub-pixels has a characteristic width within a geometric optical region.

In an embodiment of the present application, a shape of each of the plurality of combined pixels includes at least one of a square, a rectangle, or a circular ring.

In an embodiment of the present application, the light deflection device is configured to converge the monochromatic light from all of the plurality of monochromatic sub-pixels that has transmitted through the filter layer to a same designated position.

In an embodiment of the present application, the light deflection device is configured to converge the monochromatic light from the plurality of monochromatic sub-pixels corresponding to a same combined pixel among the plurality of combined pixels to a same designated position; and different combined pixels correspond to different designated positions.

According to another aspect of the present application, an optical lens is further provided in the present application. The optical lens includes any of the filtering-based achromatic optical devices described above.

According to another aspect of the present application, an imaging assembly is further provided in the present application. The imaging assembly includes a photosensitive component and the optical lens described above. The optical lens is located on a photosensitive side of the photosensitive component.

In summary, the filtering-based achromatic optical device includes the filter layer and the light deflection device. The filter layer includes a plurality of combined pixels, and each of the plurality of combined pixels includes a plurality of monochromatic sub-pixels arranged adjacently. Each of the plurality of monochromatic sub-pixels is configured to selectively transmit monochromatic light of a corresponding color and absorb light of other colors. The light deflection device is attached to a surface of the filter layer, and includes a plurality of sub-light deflection devices in one-to-one correspondence with positions of the plurality of monochromatic sub-pixels. Each of the plurality of sub-light deflection devices is configured to adjust a propagation direction of the monochromatic light from a corresponding one of the plurality of monochromatic sub-pixels, so as to direct the monochromatic light to a designated position. The optical device described above, while simplifying the technology, can also ensure an improved chromatic dispersion elimination effect, thereby optimizing the imaging performance of the optical device.

According to another aspect of the present application, a filtering-based achromatic optical device is further provided. The filtering-based achromatic optical device includes a light-transmitting substrate, a color filter layer, and a light deflection modulation structure;
the color filter layer is attached to the light-transmitting substrate, and includes a plurality of combined pixels arranged on the light-transmitting substrate. Each of the plurality of combined pixels includes a plurality of monochromatic sub-pixels arranged adjacently. Each of the plurality of monochromatic sub-pixels is configured to selectively transmit monochromatic light of a corresponding color and absorb light of other colors;
the light deflection modulation structure is integrally formed with the color filter layer, includes a plurality of light deflection modulation units in one-to-one correspondence with the plurality of monochromatic sub-pixels. Each of the plurality of light deflection modulation units is configured to, while a corresponding one of the plurality of monochromatic sub-pixels filters light, modulate a propagation direction of transmitted light so as to direct the transmitted light to a designated position.

In an embodiment of the present application, the plurality of monochromatic sub-pixels in each of the plurality of combined pixels have different colors, and the light deflection modulation structure is configured to converge the monochromatic light that has transmitted through all of the plurality of monochromatic sub-pixels in each of the plurality of combined pixels to a same designated position.

In an embodiment of the present application, the plurality of monochromatic sub-pixels in each of the plurality of combined pixels have different colors, and the light deflection modulation structure is configured to converge the monochromatic light of a same color that has transmitted through the plurality of monochromatic sub-pixels to a same designated position.

In an embodiment of the present application, the color filter layer is configured as an RGB color filter. Each of the plurality of combined pixels in the RGB color filter includes a red sub-pixel configured to selectively transmit red light, a green sub-pixel configured to selectively transmit green light, and a blue sub-pixel configured to selectively transmit blue light.

In an embodiment of the present application, each of the plurality of monochromatic sub-pixels has a characteristic width required to be within a geometric optical region.

In an embodiment of the present application, a shape of each of the plurality of combined pixels includes at least one of a square, a rectangle, or a circular ring.

In an embodiment of the present application, a thickness of the color filter layer is greater than a height or a depth of the light deflection modulation structure, so as to form a filter substrate between the light deflection modulation structure and the light-transmitting substrate.

In an embodiment of the present application, the light deflection modulation structure is configured as one of a metasurface optical structure, a micro-geometric optical structure, or a diffractive optical structure.

In an embodiment of the present application, the light deflection modulation structure is configured as a transmission phase-type metasurface provided in the color filter layer; and each of the plurality of light deflection modulation units in the transmission phase-type metasurface includes a plurality of dielectric pillars arranged periodically and having different widths, and each of the plurality of dielectric pillars has a characteristic dimension required to be within a sub-wavelength region.

In an embodiment of the present application, the light deflection modulation structure is configured as a geometric phase-type metasurface provided in the color filter layer; and each of the plurality of light deflection modulation units in the geometric phase-type metasurface includes a plurality of pillars arranged in an array and having varying orientation angles, and each of the plurality of pillars has a characteristic width required to be within a sub-wavelength region.

In an embodiment of the present application, the light deflection modulation structure is configured as a micro-geometric lens array provided in the color filter layer; and the plurality of light deflection modulation units in the micro-geometric lens array are configured as Fresnel lenses in one-to-one correspondence with the plurality of monochromatic sub-pixels.

In an embodiment of the present application, the light deflection modulation structure is configured as a diffraction grating array provided in the color filter layer; and the plurality of light deflection modulation units in the diffraction grating array are configured as relief gratings in one-to-one correspondence with the plurality of monochromatic sub-pixels.

According to another aspect of the present application, an optical lens is further provided in the present application. The optical lens includes any of the filtering-based achromatic optical devices described above.

According to another aspect of the present application, an imaging assembly is further provided in the present application. The imaging assembly includes a photosensitive component and the optical lens described above. The optical lens is located on a photosensitive side of the photosensitive component.

According to another aspect of the present application, a method for manufacturing a filtering-based achromatic optical device is provided in the present application. The method includes: fabricating a color filter layer on a light-transmitting substrate to form a plurality of combined pixels arranged on the light-transmitting substrate; and fabricating a light deflection modulation structure in the color filter layer to form a plurality of light deflection modulation units;
each of the plurality of combined pixels includes a plurality of monochromatic sub-pixels arranged adjacently, and each of the plurality of monochromatic sub-pixels is configured to selectively transmit monochromatic light of a corresponding color and absorb light of other colors;
the plurality of light deflection modulation units are in one-to-one correspondence with the plurality of monochromatic sub-pixels. Each of the plurality of light deflection modulation units is configured to, while a corresponding one of the plurality of monochromatic sub-pixels filters light, modulate a propagation direction of transmitted light so as to direct the transmitted light to a designated position.

In an embodiment of the present application, fabricating the color filter layer on the light-transmitting substrate further includes: attaching an RGB color filter to the light-transmitting substrate, by lamination, coating, or deposition process.

In an embodiment of the present application, fabricating the light deflection modulation structure in the color filter layer further includes: fabricating one of a metasurface optical structure, a micro-geometric optical structure, or a diffractive optical structure in the color filter layer by a photolithography or nanoimprint lithography process.

In summary, the filtering-based achromatic optical device, the method for manufacturing the same, and an application thereof according to the present application can completely solve the chromatic dispersion problem.

In an embodiment of the present application, the filtering-based achromatic optical device can completely replace an application of conventional curved lenses in white-light imaging.

In an embodiment of the present application, while completely solving the chromatic dispersion problem, the filtering-based achromatic optical device has relatively low fabrication difficulty, which is convenient for promotion and popularization in industrial applications.

In an embodiment of the present application, the filtering-based achromatic optical device imposes no specific limitations on polarization characteristics, offering relatively good practicality and applicability.

In an embodiment of the present application, the filtering-based achromatic optical device is capable of achieving high-quality and clean imaging, fully realizing the potential of metasurface optics in the white-light imaging industry.

In addition, in the filtering-based achromatic optical device, the method for manufacturing the same, and the application thereof according to the present application, no expensive materials or complex structures are required to achieve the above-mentioned objectives or advantages. Therefore, the present application successfully and effectively provides a solution that not only offers the filtering-based achromatic optical device, the method for manufacturing the same, and the application thereof that are simple, but also enhances the practicality and reliability of the filtering-based achromatic optical device, the method for manufacturing the same, and the application thereof.

Details of one or more embodiments of the present application are presented in the attached drawings and descriptions below. And other features, purposes, and advantages of the present application will become apparent from the description, drawings and claims.

### BRIEF DESCRIPTION OF THE DRAWINGS

For a better description and illustration of the embodiments and/or examples of those inventions disclosed herein, reference may be made to one or more accompanying drawings. The additional details or examples used to describe the accompanying drawings should not be construed as limiting the scope of any of the disclosed inventions, the presently described embodiments and/or examples, or the best modes of these inventions as presently understood.
FIG. 1 is a schematic diagram of a refractive lens in the related art.
FIG. 2 is a schematic diagram of a diffractive lens in the related art.
FIG. 3 is a schematic structural diagram of a filter-based achromatic optical device according to an embodiment of the present application.
FIG. 4 is a schematic diagram of a manufacturing process of a PB grating according to an embodiment of the present application.
FIG. 5 is a schematic diagram of an RGB filter layer according to an embodiment of the present application.
FIG. 6 is a schematic external view of a combined pixel according to an embodiment of the present application.
FIG. 7 is a schematic diagram of a first optical path state of the filter-based achromatic optical device according to an embodiment of the present application.
FIG. 8 is a schematic diagram of a second optical path state of the filter-based achromatic optical device according to an embodiment of the present application.
FIG. 9 is a schematic diagram of a third optical path state of the filter-based achromatic optical device with superimposed gratings of different thicknesses according to an embodiment of the present application.
FIG. 10 is a schematic diagram of an imaging assembly according to an embodiment of the present application.
FIG. 11 is a schematic diagram of a method for manufacturing a filter-based achromatic optical device according to an embodiment of the present application.
FIG. 12 is a schematic diagram of a process for manufacturing a color film of a conventional filter layer according to an embodiment of the present application.
FIG. 13 is a schematic diagram of a process for manufacturing a conventional planar grating according to an embodiment of the present application.
FIG. 14 is a schematic structural diagram of a filtering-based achromatic programmable optical device according to an embodiment of the present application.
FIG. 15 is a schematic diagram of a first optical path state of the filtering-based achromatic programmable optical device according to the above embodiment of the present application.
FIG. 16 is a schematic diagram of a second optical path state of the filtering-based achromatic programmable optical device according to the above embodiment of the present application.
FIG. 17 is a schematic diagram of a third optical path state of the filtering-based achromatic programmable optical device according to the above embodiment of the present application.
FIG. 18A is a schematic diagram of a first configuration of a combined pixel in the filtering-based achromatic programmable optical device according to the above embodiment of the present application.
FIG. 18B is a schematic diagram of a second configuration of the combined pixel in the filtering-based achromatic programmable optical device according to the above embodiment of the present application.
FIG. 18C is a schematic diagram of a third configuration of the combined pixel in the filtering-based achromatic programmable optical device according to the above embodiment of the present application.
FIG. 18D is a schematic diagram of a fourth configuration of the combined pixel in the filtering-based achromatic programmable optical device according to the above embodiment of the present application.
FIG. 19 is a first example of a light deflection modulation structure in the filtering-based achromatic programmable optical device according to the above embodiment of the present application.
FIG. 20 is a second example of the light deflection modulation structure in the filtering-based achromatic programmable optical device according to the above embodiment of the present application.
FIG. 21 is a third example of the light deflection modulation structure in the filtering-based achromatic programmable optical device according to the above embodiment of the present application.
FIG. 22 is a fourth example of the light deflection modulation structure in the filtering-based achromatic programmable optical device according to the above embodiment of the present application.
FIG. 23 is a schematic block diagram of an imaging assembly according to an embodiment of the present application.
FIG. 24 is a schematic flowchart of a method for manufacturing a filtering-based achromatic programmable optical device according to an embodiment of the present application.

### DETAILED DESCRIPTION

The following description is provided to disclose the present application such that those skilled in the art can implement the present application. The preferred embodiments described below are merely examples, and those skilled in the art may conceive of other obvious variations. The basic principles defined in the following description of the present application may be applied to other embodiments, variations, modifications, equivalents, and other technical solutions without departing from the spirit and scope of the present application.

In the description of the present application, it should be understood by those skilled in the art that orientations or positional relationships indicated by terms such as "longitudinal", "lateral", "upper", "lower", "front", "rear", "left", "right", "vertical", "horizontal", "top", "bottom", "inner", and "outer" are based on the orientations or positional relationships shown in the drawings, which are merely for the convenience of describing the present application and simplifying the description, and do not indicate or imply that the referred apparatus or element must have a specific orientation and be constructed and operated in a specific orientation. Therefore, the above terms cannot be understood as a limitation on the present application.

In the present application, the term "a" or "an" in the claims and the description should be understood as "one or more". That is, in one embodiment, the number of an element may be one, while in another embodiment, the number of the element may be more than one. Unless it is explicitly indicated in the present application that the number of the element is only one, the term "a" or "an" cannot be understood as unique or singular, and the term "a" or "an" cannot be understood as a limitation on quantity.

In the description of the present application, it should be understood that terms such as "first" and "second" are used for descriptive purposes only and should not be construed as indicating or implying relative importance. In the description of the present application, it should be noted that, unless otherwise explicitly specified and limited, terms such as "connected" and "coupled" should be understood broadly, for example, these terms may indicate a fixed connection, a detachable connection, or an integral connection; may be a mechanical connection or an electrical connection; may be a direct connection or an indirect connection through an intermediate medium. For those skilled in the art, specific meanings of the above terms in the present application may be understood according to specific situations.

In the description of this specification, references to terms "one embodiment", "an embodiment", "some embodiments", "an example", "specific example", or "some examples" are intended to indicate that specific features, structures, materials, or characteristics described in connection with the embodiment or example are included in at least one embodiment or example of the present application. In this specification, the schematic representations of the above terms are not necessarily directed to the same embodiment or example. Furthermore, the described specific features, structures, materials, or characteristics may be combined in any suitable manner in any one or more embodiments or examples. In addition, for those skilled in the art, different embodiments or examples described in this specification, as well as features of different embodiments or examples may be combined and integrated, without being mutually contradictory.

Refractive optical devices, such as converging lenses, generate phase differences according to optical path differences. Although bulky in shape, the refractive optical devices are still widely used as optical combiners and imaging optical devices in near-eye display devices. On the other hand, diffractive optical devices can provide the same phase pattern with a thinner form factor, but the chromatic dispersion thereof is generally more pronounced than that of the refractive optical devices. Another distinct difference between the refractive optical devices and the diffractive optical devices is opposite chromatic aberration behaviors.

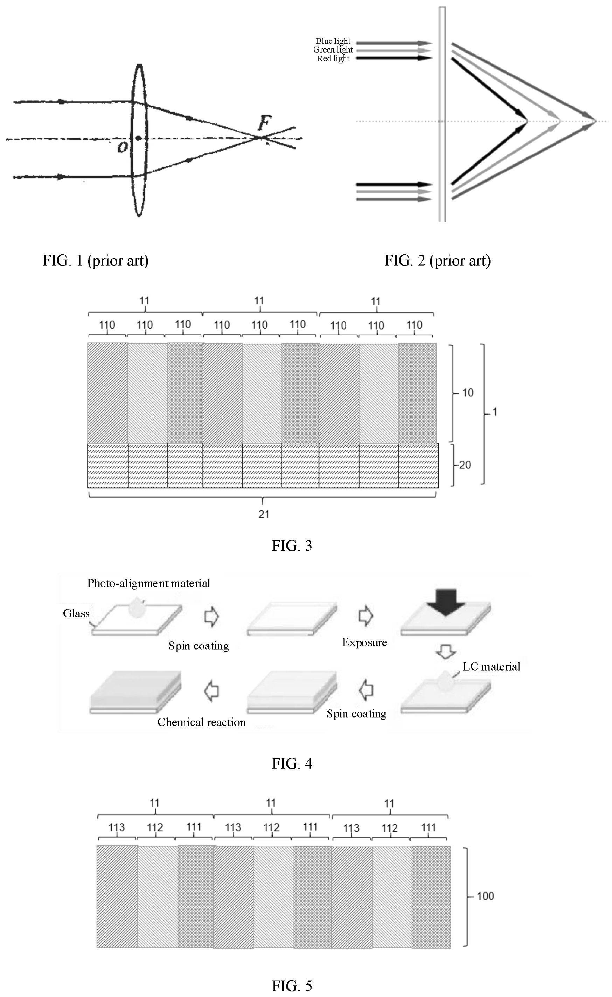

Taking a lens as an example, referring to FIG. 1, which is a schematic diagram of a refractive lens. The refractive lens belongs to a refractive optical device, and a focal length of the refractive lens depends on a refractive index of a lens medium. According to a formula of Lensmaker, among incident red, green, and blue (RGB) light, the red light has a smallest refractive index and thus has a longest focal length. However, the order is reversed for a diffractive lens, as shown in FIG. 2, which is a schematic diagram of the diffractive lens. The reason is that for the diffractive lens, a diffraction angle is proportional to a wavelength. This means that the red wavelength will have a larger angle, i.e., shorter focal length than green and blue light.

An effective method to mitigate chromatic aberration is to combine a diffractive optical device with a refractive optical device. However, in such a system, chromatic aberration to be corrected originates from the refractive optical device, while the diffractive optical device serves as a compensator. Consequently, the entire system remains bulky, and achieving high-quality achromatic imaging performance while maintaining a compact form factor and a large aperture remains a significant technical challenge. If the above problem can be solved, the practical application of diffractive optics will open up new prospects.

On this basis, a filtering-based achromatic optical device and a method for manufacturing the same and an application thereof are provided in the present application, which can completely solve the chromatic dispersion problem. In the filtering-based achromatic optical device, a light deflection device can be attached to a surface of a filter layer to form a filter-based achromatic optical device.

Specifically, referring to FIG. 3, which is a schematic structural diagram of a filter-based achromatic optical device. A filter-based achromatic optical device 1 is provided in an embodiment of the present application. The filter-based achromatic optical device 1 includes a filter layer 10 and a light deflection device 20.

The filter layer 10 includes a plurality of combined pixels 11, and each of the plurality of combined pixels 11 includes a plurality of monochromatic sub-pixels 110 arranged adjacently. Each of the plurality of monochromatic sub-pixels 110 is configured to selectively transmit monochromatic light of a corresponding color and absorb light of other colors.

The light deflection device 20 is attached to a surface of the filter layer 10, and includes a plurality of sub-light deflection devices 21 in one-to-one correspondence with positions of the plurality of monochromatic sub-pixels 110. Each of the plurality of sub-light deflection devices 21 is configured to adjust a propagation direction of the monochromatic light from a corresponding one of the plurality of monochromatic sub-pixels 110, so as to direct the monochromatic light to a designated position.

Specifically, the light deflection device 20 and the filter layer 10 may be detachably attached to each other, and the plurality of sub-light deflection devices 21 may also be detachably attached to each other. In other specific embodiments, the attachment pattern of the grating may be determined according to actual conditions, which is not limited herein.

Specifically, when white light, natural light, or combined-color light (i.e., light containing multiple colors) is incident on the filter-based achromatic optical device 1, each of the plurality of monochromatic sub-pixels 110 of the filter layer 10 allows only monochromatic light of a certain color to pass through. Herein, the monochromatic light may refer to light in a narrow wavelength band.

The filter-based achromatic optical device 1 includes the filter layer 10 and the light deflection device 20. The filter layer 10 includes the plurality of combined pixels 11, and each of the plurality of combined pixels 11 includes a plurality of monochromatic sub-pixels 110 arranged adjacently. Each of the plurality of monochromatic sub-pixels 110 is configured to selectively transmit monochromatic light of a corresponding color and absorb light of other colors. The light deflection device 20 is attached to the surface of the filter layer 10, and includes a plurality of sub-light deflection devices 21 in one-to-one correspondence with positions of the plurality of monochromatic sub-pixels 110. Each of the plurality of sub-light deflection devices 21 is configured to adjust the propagation direction of the monochromatic light from the corresponding one of the plurality of monochromatic sub-pixels, so as to direct the monochromatic light to the designated position. The filter-based achromatic optical device 1, while simplifying the technology, can be ensure an improved chromatic dispersion elimination effect, thereby optimizing the imaging performance of the optical device.

In an embodiment, the light deflection device 20 may further include at least one of a micro-prism, a grating, a transmissive holographic optical device, or a metasurface device.

Specifically, the light deflection device is a device for changing or adjusting a beam path, which has wide applications in fields such as optical communication, imaging, and laser processing. According to different design principles, the light deflection device can achieve functions such as deflection, splitting, combining, and focusing of the light beam, thereby meeting requirements of different optical systems.

Specifically, the light deflection device commonly includes the micro-prism, the grating, the transmissive holographic optical device, or the metasurface device.

The micro-prism may be a device that uses a reflection effect of a microscopic prism array on a mirror surface to change a propagation direction of a light beam. By adjusting a shape, a size, and an arrangement of the micro-prism, precise control and deflection of the light beam can be achieved.

The grating may utilize a periodic optical element to change the propagation direction of the light beam through interference and diffraction effects. A grating constant and a period of the grating can be adjusted as required, thereby achieving precise control of the light beam. The grating may have characteristics such as broad spectral response, high resolution, and good tunability, and may be widely used in fields such as laser spectrometers and wavelength division multiplexing in optical communication systems.

The transmissive holographic optical device may be a device that utilizes the principle of holographic diffraction to change a propagation direction of a light beam. Through appropriate design and fabrication techniques, multiple holographic optical elements can be combined to achieve complex modulation and deflection of the light beam.

The metasurface device may be a novel type of optical device, and a basic structure of the metasurface device may include a plurality of micron-scale sub-waveguide units and control elements. By adjusting a phase and an amplitude of the control elements, efficient control and deflection of the light beam can be achieved.

In the foregoing embodiment, by configuring the light deflection device 20 as one of the micro-prism, the grating, the transmissive holographic optical device, or the metasurface device, comprehensive consideration among various devices is possible, ensuring precise control and deflection of the light beam.

In an embodiment, the grating may include at least one of a relief grating or a Pancharatnam-Berry (PB) grating.

Specifically, the relief grating may be an optical element that utilizes the interference and diffraction effects of surface microstructures to achieve functions such as light splitting, deflection, and spectral analysis. Compared with conventional planar gratings, the relief grating may have a more complex three-dimensional structure, and can achieve more efficient optical performance.

The manufacturing process of the relief grating may generally include the following steps: photoresist coating, exposure, development, etching, and backside photoresist removal.

First, photoresist may be coated onto a required substrate. The photoresists may be a special photosensitive material that can be formed as a desired photolithographic pattern through exposure and development.

Next, the photoresist surface may be exposed to ultraviolet radiation using a photolithography apparatus. During the exposure process, the period and shape of the grating can be determined by controlling positions of a light source and a mask of the photolithography apparatus.

Then, an exposed sample may be developed, i.e., a portion of the photoresist not exposed to ultraviolet radiation may be removed. The development process may be performed using a wet or dry method, depending on a type of photoresist and a choice of developer.

After development, the sample may be subjected to an etching process. The etching may include a process of transferring the pattern exposed on the developed photoresist onto a substrate material. Common etching methods may include wet etching and dry etching.

Finally, the photoresist may be removed from the backside. In some cases, in order to reduce the impact of backside reflection of the relief grating on the optical performance, backside photoresist removal treatment is required.

The fabrication process of the relief grating requires high-precision equipment and process flow. The coating of photoresist requires uniformity and good thickness control. During exposure, precise light source and mask alignment may be required. The development process requires control of a developer concentration and time to avoid over-development or under-development. The etching process requires control of etch rate and etch depth. Each step requires strict parameter control to ensure that the final relief grating may have the desired performance.

Specifically, the PB grating may refer to a planar binary grating. The PB grating is a special optical element configured to manipulate the transmission and reflection characteristics of incident light. The PB grating may include periodic structures that can be realized by transparent and opaque regions alternately arranged on a plane, with a spacing comparable to the wavelength of the light wave.

Specifically, referring to FIG. 4, which is a schematic diagram of a manufacturing process of the PB grating. First, a photo-alignment material may be dissolved and spin-coated onto a clean glass substrate. BY (an organic diazo dye) and SD1 (sulfonic acid dye 1) are two commonly photo-alignment materials. Both the BY and SD1 have excellent photo-alignment effects. Next, the photo-alignment layer may be exposed using a 457 nm laser. A uniform layer of LC material may be formed after spin-coating using reactive mesogen RM257. Finally, the PB grating may be exposed to ultraviolet radiation to achieve grating stabilization. In other specific embodiments, detailed quantitative parameters for preparation of the PB grating may be determined according to actual requirements for chromatic dispersion elimination, which is not limited herein.

Specifically, the PB grating may also be one of a geometric metasurface grating or an ECB grating.

Specifically, the geometric metasurface grating may be an artificial structure designed with microscopic geometric shapes that can control the propagation of incident light in a very precise manner. Compared with conventional gratings, the geometric metasurface grating may have higher degrees of freedom and can achieve more complex optical functions, such as lenses, polarization control, and beam shaping. By adjusting the structural parameters of the geometric metasurface grating, precise control of the phase, amplitude, and polarization state of the light wave can be achieved.

The ECB grating refers to an electrically controlled birefringence (ECB) grating, which is a grating structure used in a liquid crystal light modulator. The ECB grating may control orientation of liquid crystal molecules by applying an electric field, thereby manipulating propagation characteristics of light. The ECB grating may be based on electrically induced birefringence property of liquid crystal materials. The liquid crystal materials may have two main refractive indices including a fast-axis refractive index and a slow-axis refractive index. When the liquid crystal molecules are arranged along a fast axis, birefringence may occur for light propagating inside the liquid crystal molecules, and the light wave may be split into two light waves with different phases, which includes fast-axis light and slow-axis light. When the liquid crystal molecules are arranged along a slow axis, light may propagate with only one refractive index. The principle of the ECB grating is to modulate the orientation of the liquid crystal molecules via an electric field, causing the liquid crystal molecules to switch between the fast axis and the slow axis, thereby achieving light modulation.

The structure is as follows: an ECB grating generally includes two parallel transparent electrode plates with a liquid crystal material filled between the two parallel transparent electrode plates. One of the electrode plates may have a fine grating structure for generating spatial phase modulation. Under an electric field, the liquid crystal molecules may be aligned along the direction of the electric field, thereby changing the propagation characteristics of light. A typical ECB grating structure may include a control plane, a package sheet, an alignment film, and the like.

The ECB grating may have wide applications in display technology. Common applications may include liquid crystal televisions, liquid crystal displays, projectors, and the like. The applications achieve display and modulation of images by controlling the electric field of the ECB grating. Compared with other liquid crystal modulators, the ECB grating may have advantages such as fast response speed, high contrast, and wide viewing angle. In addition, since the ECB grating can achieve grayscale adjustment, the ECB grating can also be used to display images of different grayscale levels.

In an embodiment, the plurality of monochromatic sub-pixels 110 corresponding to the same combined pixel 11 may be of different light transmission types and may be respectively configured to transmit monochromatic light of different colors.

It may be understood that the monochromatic light referred to in the present application means light in a narrow band. For example, the monochromatic light may be visible light such as red light, green light, or blue light, or may be light in various narrow bands such as infrared light. The combined pixel may be obtained by arranging different monochromatic sub-pixels in different combinations. For example, the red, green, and blue monochromatic sub-pixels may form a group of combined pixels. In some other embodiments, the red and green monochromatic sub-pixels may also form a group of combined pixels; the green and blue monochromatic sub-pixels may also form a group of combined pixels; and the red and blue monochromatic sub-pixels may also form a group of combined pixels, which are not limited herein.

In the above embodiments, based on the plurality of monochromatic sub-pixels 110 corresponding to the combined pixel 11, accurate transmission of monochromatic light can be achieved, and separation efficiency of white light is improved.

In an embodiment, referring to FIG. 5, which is a schematic diagram of an RGB filter layer. The filter layer 10 may be configured as an RGB filter layer 100. Each of the plurality of combined pixels 11 in the RGB filter layer 100 may include a red sub-pixel 111 configured to selectively transmit red light, a green sub-pixel 112 configured to selectively transmit green light, and a blue sub-pixel 113 configured to selectively transmit blue light.

Specifically, as referred to in this embodiment, the red light may be in a band between 600 nm and 630 nm; the green light may be in a band between 500 nm and 600 nm; and the blue light may be in a band between 430 nm and 470 nm.

It may be understood that in other examples of the present application, the filter layer 10 may also be implemented as a filter layer of other color combinations, such as a filter layer based on three secondary colors derived from red, yellow, and blue, which is not described in detail herein.

Illustratively, the RGB filter layer 100 of the present application may be fabricated by processes such as lamination, coating, or deposition. It can be understood that the RGB filter layer 100 of the present application may generally be a mixture of a pigment and a resin, which can selectively absorb light of two colors in RGB and transmit light of one color in RGB. The process for fabricating the RGB filter layer 100 is very mature and is widely used in LCD displays in a liquid crystal display industry or CMOS image sensors in an imaging industry, which will not be described in detail herein. In addition, in the RGB filter layer 100 of the present application, the transmittance and transmission bandwidth of the monochromatic sub-pixel 110 may be adjustable, for example, by adjusting a concentration of the pigment or a thickness of the film layer.

In the above embodiment, by configuring the filter layer 10 as the RGB filter layer 100, the transmission of red, blue, and green light can be accurately achieved.

In an embodiment, each of the plurality of monochrome sub-pixels 110 may have a characteristic width within a geometric optical region.

Specifically, to avoid diffraction interference between different monochromatic sub-pixels 110, the characteristic width of each of the plurality of monochromatic sub-pixels 110 in this embodiment may be required to be within the geometrical optics region. For example, the width of each monochromatic sub-pixel 110 may be greater than one hundred wavelengths of a corresponding monochromatic light. That is, the width of each monochromatic sub-pixel 110 may be greater than one hundred times the wavelength of the corresponding monochromatic light.

It may be understood that the geometric optical region referred to in the present application may denote a region where a dimension is more than one hundred times the wavelength. In other embodiments, the dimension of the geometric optical region may also be determined according to actual conditions.

Specifically, according to scalar diffraction theory, a characteristic width of a pixel may depend on an optical system used. The characteristic width of the monochromatic sub-pixel 110 may refer to a width of a structure constituting the monochromatic sub-pixel correspondingly.

In the above embodiment, by setting the characteristic width of the monochromatic sub-pixel 110 within the geometric optical region, diffraction interference is minimized.

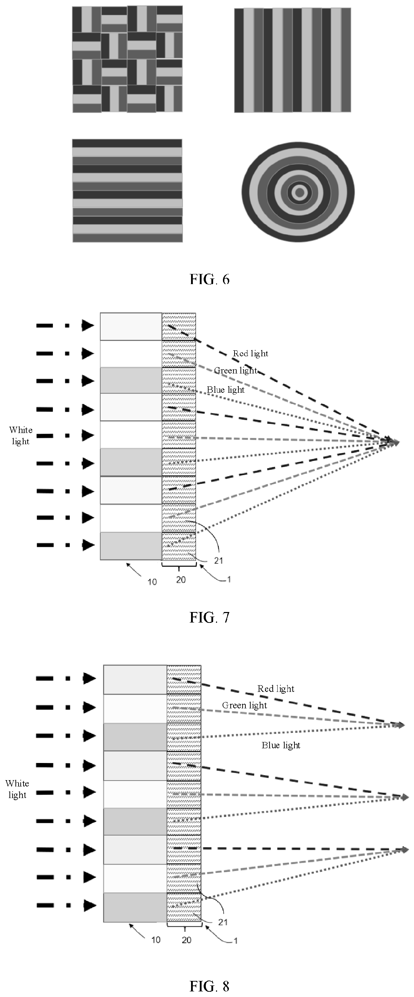

In an embodiment, referring to FIG. 6, which is a schematic external view of a combined pixel. A shape of each of the plurality of combined pixels 11 may be one of a square, a rectangle, or a circular ring.

Specifically, the combined pixel 11 of the present application may also be implemented in other forms, as long as it can be ensured that each combined pixel 11 includes monochromatic sub-pixels 110 of different colors, which will not be described in detail herein.

In the above embodiment, by implementing the shape of the combined pixel as one of the square, the rectangle, or the circular ring, various transmission requirements in different application scenarios can be satisfied.

In an embodiment, referring to FIG. 7, which is a schematic diagram of a first optical path state of the filter-based achromatic optical device. The light deflection device 20 may be configured to converge monochromatic light from all of the plurality of monochromatic sub-pixels 110 that have transmitted through the filter layer 10 to a same designated position.

Specifically, in the filter-based achromatic optical device 1 according to this embodiment, the light deflection device 20 may be used to converge the monochromatic light from all the monochromatic sub-pixels 110 that have transmitted through the filter layer 10 to the same designated position. In the above embodiment, the filter-based achromatic optical device 1 according to the present application can achieve an application function of a conventional curved lens in white-light imaging, and also has advantages of small size and light weight.

In an embodiment, referring to FIG. 8, which is a schematic diagram of a second optical path state of the filter-based achromatic optical device. The light deflection device 20 may be configured to converge monochromatic light from a plurality of monochromatic sub-pixels 110 corresponding to a same combined pixel 11 to a same designated position, and different combined pixels 11 may correspond to different designated positions.

The light deflection device 20 may be configured to converge the monochromatic light from the plurality of monochromatic sub-pixels 110 corresponding to the same combined pixel 11 to the same designated position, i.e., focal points corresponding to different combined pixels 11 may also be different.

In the above embodiment, the filter-based achromatic optical device 1 according to the present application can achieve the effect brought about by a conventional microlens array, thereby satisfying the requirements of corresponding imaging applications.

In an embodiment, when the light deflection device 20 is configured as the PB grating, a period of the PB grating may be on an order of micrometers. Specifically, the grating period may refer to a length from one refractive index change point to an adjacent refractive index change point. The elimination of adverse effects of chromatic dispersion in most scenarios can be achieved by designing the period of the PB grating to be on the order of micrometers.

In an embodiment, a thickness of the light deflection device 20 may be determined based on a preset wavelength and a preset diffraction angle.

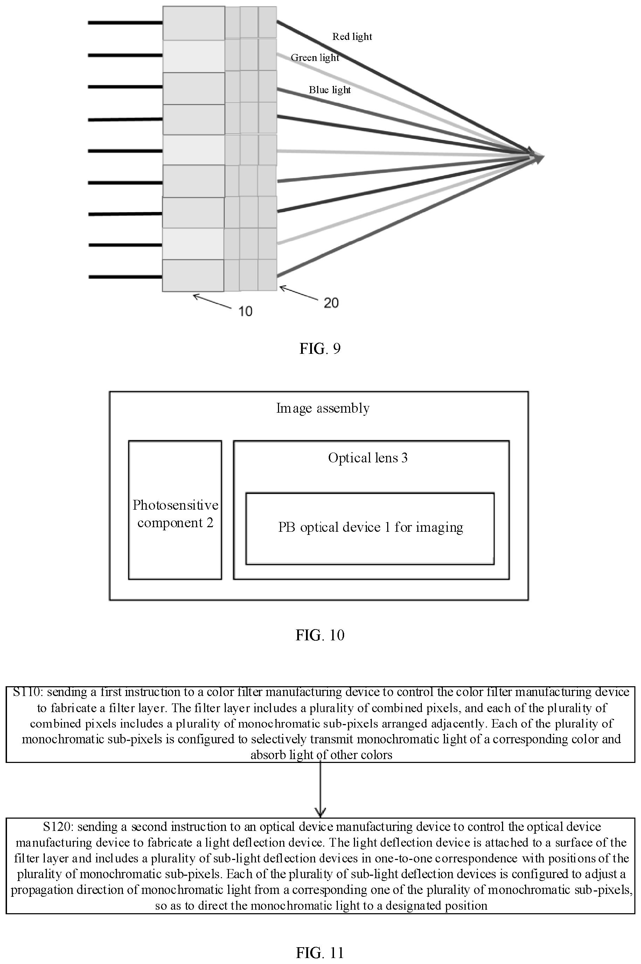

Specifically, referring to FIG. 9, which is a schematic diagram of a third optical path state of the filter-based achromatic optical device with superimposed gratings of different thicknesses. The sub-light deflection devices 21 may be configured to diffract and separate light waves according to surface structures of the sub-light deflection devices 21. Therefore, when a single sub-light deflection device 21 fails to meet a requirement for a preset diffraction angle, the sub-light deflection devices may be superimposed.

Taking the sub-light deflection device 21 as the PB grating as an example: the light incident on the PB grating may be diffracted according to a grating equation, which is as follows:$m λ = δ \left(sinα+sinβ\right) ,$ where *m* represents an integer value describing a diffraction (or spectrum) order, *λ* represents a wavelength of light, *d* represents a spacing between adjacent grooves on the grating, *α* represents an incident angle of light, and *β* represents a diffraction angle of light exiting the grating.

The constructive interference of different diffracted wavefronts occurs at integer multiples of the wavelength, which is represented by "m", where m defines the diffraction order. A diffraction angle corresponding to m=1 may be referred to as a "first order" diffraction and a diffraction angle corresponding to m=2 may be referred to as a "second order" diffraction. If m=0, the light may be either reflected directly from or transmitted through the grating, and the light may be referred to as "zeroth order" diffraction.

According to a principle of wave superposition, when peaks (or troughs) of two waves arrive at the same point simultaneously, the two waves are said to be in phase at the point, and the interfering wave will produce a maximum amplitude, which is called constructive interference.

In an embodiment, an optical lens 3 may include any of the filter-based achromatic optical devices described herein.

In an embodiment, as shown in FIG. 10, an imaging assembly is further provided in an embodiment of the present application. The imaging assembly includes a photosensitive component 2 and the optical lens 3 including the filter-based achromatic optical device 1. The optical lens 3 is located on a photosensitive side of the photosensitive component 2, such that the filter-based achromatic optical device 1 can be used to replace a conventional lens, thereby achieving high-quality and clean white-light imaging.

It should be noted that the optical lens 3 mentioned in the present application may include only the filter-based achromatic optical device 1, or may include a combination of the filter-based achromatic optical device 1 and a conventional lens. In addition, in addition to being used in the imaging assembly for imaging modulation, the optical lens 3 in the present application can also be applied in other scenarios such as an eyepiece or an objective lens in a microscope according to actual requirements, which will not be described in detail herein.

According to another aspect of the present application, as shown in FIG. 11, a method for manufacturing a filter-based achromatic optical device is further provided in an embodiment of the present application. The method includes step 110 and step 120.

Step 110 includes sending a first instruction to a color filter manufacturing device to control the color filter manufacturing device to fabricate a filter layer. The filter layer includes a plurality of combined pixels, and each of the plurality of combined pixels includes a plurality of monochromatic sub-pixels arranged adjacently. Each of the plurality of monochromatic sub-pixels is configured to selectively transmit monochromatic light of a corresponding color and absorb light of other colors.

Step 120 includes sending a second instruction to an optical device manufacturing device to control the optical device manufacturing device to fabricate a light deflection device. The light deflection device is attached to a surface of the filter layer and includes a plurality of sub-light deflection devices in one-to-one correspondence with positions of the plurality of monochromatic sub-pixels. Each of the plurality of sub-light deflection devices is configured to adjust a propagation direction of monochromatic light from a corresponding one of the plurality of monochromatic sub-pixels, so as to direct the monochromatic light to a designated position.

It should be noted that, in the step 110 of the present application, the filter layer may be fabricated by lamination, coating, or deposition process.

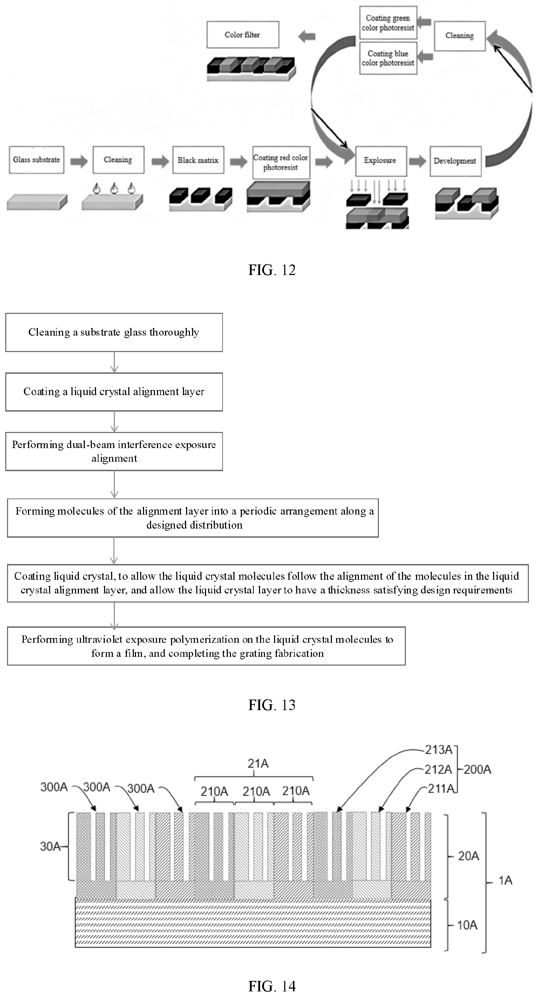

Illustratively, referring to FIG. 12, which is a schematic diagram of a process for manufacturing a conventional color filter layer (color film). First, a glass substrate may be obtained and cleaned. Second, a black matrix may be applied on the glass substrate, then a red color photoresist may be coated, followed by exposure, development, and first cleaning.

According to the same steps as above, a green color photoresist and a blue color photoresist may be sequentially coated, i.e., coating the green color photoresist, followed by exposure, development, and second cleaning; and coating the blue color photoresist, followed by exposure, development, and third cleaning.

The color filter may be finally obtained through the above steps.

Alternatively, in the step 120 of the present application, the sub-light deflection devices may be fabricated by photolithography or nanoimprint lithography process.

The sub-light deflection devices may also be replaced with other types of grating layers. Illustratively, the nanoimprint lithography process may be used to fabricate a metasurface optical structure. The fabrication process may be as follows: first, coating photoresist on the surface of the color filter layer; imprinting with a mold to perform demolding after curing by light/heat; then, after removing residual photoresist, etching the color filter layer; finally, removing all photoresist to fabricate the metasurface optical structure in the color filter layer.

Fabricating the metasurface optical structure by using a photolithography process may include: first, coating photoresist on the surface of the color filter layer; then, performing exposure and development to form a photoresist mask; next, etching the color filter layer; finally, removing all the photoresist to fabricate the metasurface optical structure in the color filter layer.

Illustratively, referring to FIG. 13, which is a schematic diagram of a process for manufacturing a conventional planar grating.

The first step may include cleaning a glass of a substrate (also referred to as a substrate glass) thoroughly.

In the process for manufacturing a liquid crystal grating, the first step is to clean the substrate glass. This is a very important step because any contaminants on surfaces of the substrate may adversely affect subsequent process steps. The substrate glass may be cleaned by various cleaning methods, such as ultrasonic cleaning, solvent cleaning, etc., to remove contaminants and impurities. The cleaned substrate glass should remain dry for subsequent operations.

The second step may include coating a liquid crystal alignment layer.

The second step is to coat the liquid crystal alignment layer. The liquid crystal alignment layer may be a foundation for alignment of liquid crystal molecules, and quality and performance of the liquid crystal alignment layer may play a key role in the fabrication of the liquid crystal grating. The liquid crystal alignment layer may be generally made of organic macromolecular materials, which have a high surface energy and a specific surface direction, and can guide liquid crystal molecules to be aligned in a specific direction. When coating the liquid crystal alignment layer, attention should be paid to control of uniformity and thickness to ensure that the liquid crystal molecules can be correctly oriented in subsequent steps.

The third step may include performing dual-beam interference exposure alignment.

In the third step, the liquid crystal molecules may be aligned by performing the dual-beam interference exposure technique. By interference exposure, a light intensity distribution pattern with periodicity can be generated. This pattern will act on the arrangement of the liquid crystal molecules, thereby controlling the orientation of the liquid crystal molecules. The dual-beam interference exposure technology can provide higher precision and flexibility, allowing the liquid crystal molecules to be arranged in more complex patterns, and thus requirements of different applications can be satisfied.

The fourth step may include forming molecules of the alignment layer into a periodic arrangement along a designed distribution.

In the fourth step, the molecules in the liquid crystal alignment layer may be arranged in a predesigned pattern. Such arrangement may be periodic, forming an ordered structure. By precisely controlling positions and directions of the molecules in the liquid crystal alignment layer, oriented alignment of the liquid crystal molecules can be achieved. The optical properties and response characteristics of the liquid crystal molecules can be changed by the ordered arrangement, providing a basis for the function of the liquid crystal grating.

The fifth step may include coating liquid crystal. The liquid crystal molecules may follow the alignment of the molecules in the liquid crystal alignment layer, and the liquid crystal layer may have a thickness satisfying design requirements.

The fifth step may include coating the liquid crystal material onto the alignment layer. In this step, the liquid crystal molecules may be arranged following the alignment pattern of the molecules in the liquid crystal alignment layer. By controlling the thickness of the liquid crystal layer, the response characteristics and optical properties of the liquid crystal molecules can be adjusted. The thickness of the liquid crystal layer generally needs to be precisely controlled to ensure the desired optical effect and display performance.

The sixth step may include performing ultraviolet exposure polymerization on the liquid crystal molecules to form a film, and completing the grating fabrication.

The last step may include performing an ultraviolet exposure polymerization reaction on the liquid crystal molecules to polymerize the liquid crystal molecules into a solid film. Through ultraviolet exposure, free radicals in the liquid crystal molecules may be excited and reacted with surrounding molecules to form a cross-linked network structure. By the cross-linked structure, the ordered arrangement of the liquid crystal molecules can be maintained and the mechanical strength and stability of the liquid crystal layer can be increased. After the grating fabrication is completed, the planar grating can be applied in various liquid crystal displays and optical devices.

Through the above six steps, the process for fabricating the planar grating has been described in detail. The careful operation and precise control may be required in the process to ensure that the planar grating has excellent performance and reliable quality. Gratings play an important role in modern optics and display technologies, and processes for fabricating the gratings are continuously improved and optimized to satisfy ever-evolving application requirements.

Those skilled in the art may understand that all or part of the processes of the methods in the above embodiments may be implemented by a computer program instructing relevant hardware. The computer program may be stored in a non-volatile computer-readable storage medium, and when executed, the processes of the methods in the above embodiments may be performed. Any reference to a memory, database, or other medium used in the various embodiments provided in the present application may include at least one of a non-volatile memory and a volatile memory. The non-volatile memory may include read-only memory (ROM), magnetic tape, floppy disk, flash memory, optical memory, high-density embedded non-volatile memory, resistive random access memory (ReRAM), magneto-resistive random access memory (MRAM), ferroelectric random access memory (FRAM), phase change memory (PCM), graphene memory, or the like. The volatile memory may include a random access memory (RAM), an external cache memory, or the like. By way of illustration and not limitation, the RAM may be in various forms, such as a static random access memory (SRAM) or a dynamic random access memory (DRAM). The database in the embodiments provided in the present application may include at least one of a relational database and a non-relational database. The non-relational database may include a blockchain-based distributed database and the like, and is not limited thereto. The processor referred to in the embodiments provided in the present application may be a general-purpose processor, a central processing unit, a graphics processor, a digital signal processor, a programmable logic, a data processing logic based on quantum computing, or the like, and is not limited thereto.

It is worth mentioning that in other embodiments of the present application, the filtering-based achromatic optical device may also include a light deflection modulation structure formed on the color filter layer to form a filter-based achromatic programmable optical device, which can completely solve the chromatic dispersion problem, so as to completely replace the application of conventional curved lenses in white-light imaging.

Specifically, referring to FIG. 14 to FIG. 22 of the accompanying drawings of the present application, a filtering-based achromatic programmable optical device 1A is provided in an embodiment of the present application. The filtering-based achromatic programmable optical device 1A may include a light-transmitting substrate 10A, a color filter layer 20A attached to the light-transmitting substrate 10A, and a light deflection modulation structure 30A formed on the color filter layer 20A.

More specifically, as shown in FIG. 14 to FIG. 17, the color filter layer 20A may include a plurality of combined pixels 21A arranged on the light-transmitting substrate 10A. Each of the plurality of combined pixels 21A may include a plurality of monochromatic sub-pixels 210A arranged adjacently. Each of the plurality of monochromatic sub-pixel 210A is configured to selectively transmit monochromatic light of a corresponding color and absorb light of other colors. The light deflection modulation structure 30A includes a plurality of light deflection modulation units 300A in one-to-one correspondence with the plurality of monochromatic sub-pixels 210A. Each of the plurality of light deflection modulation units 300A is configured to, while a corresponding one of the plurality of monochromatic sub-pixels 210A filters light, modulate a propagation direction of transmitted light, so as to direct monochromatic light transmitted through the monochromatic sub-pixel 210A to a designated position. Thus, the chromatic aberration can be eliminated completely and the chromatic dispersion problem can be solved thoroughly.

It should be noted that, since the light deflection modulation structure 30A of the present application is directly formed on the color filter layer 20A, and the monochromatic sub-pixels 210A are in one-to-one correspondence with the light deflection modulation units 300A, although the light incident on the filtering-based achromatic programmable optical device 1A may be white light or combined-color light (i.e., light containing multiple colors), each monochromatic sub-pixel 210A allows only monochromatic light of a certain color to pass through, thereby ensuring that each light deflection modulation unit 300A modulates only monochromatic light of the same color without modulating light of different colors, so as to eliminate chromatic aberration in principle and thoroughly solve the chromatic dispersion problem. It may be understood that the monochromatic light referred to in the present application means light in a narrow band. For example, the monochromatic light may be visible light such as red light, green light, or blue light, or may be light in various narrow bands such as infrared light.

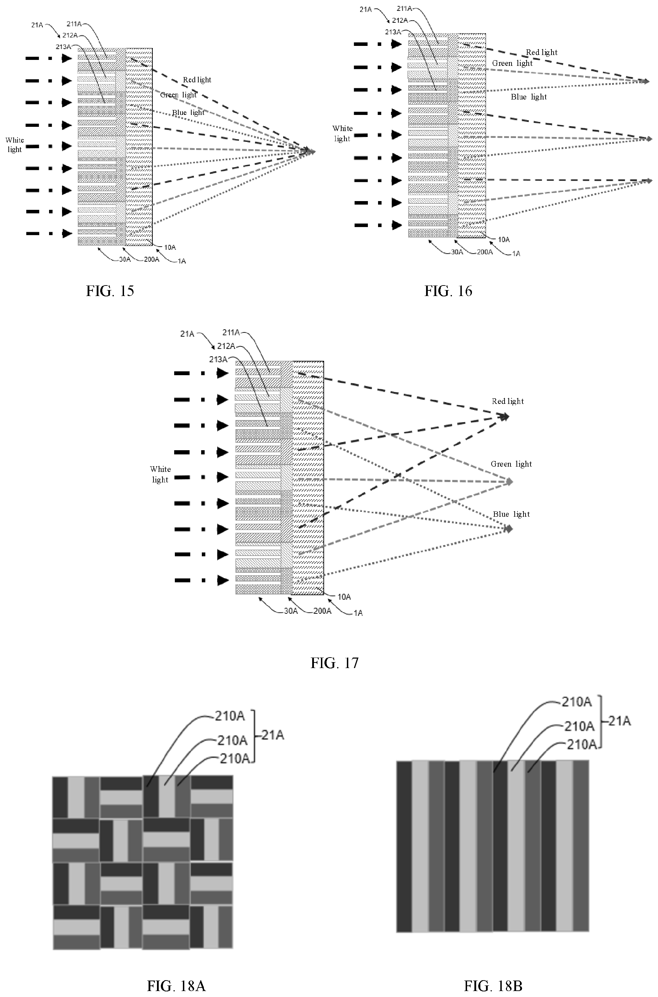

Illustratively, in a first example of the present application, as shown in FIG. 15, the plurality of monochromatic sub-pixels 210A in each of the plurality of combined pixels 21A may have different colors, and the light deflection modulation structure 30A may be configured to converge the monochromatic light that has transmitted through all of the plurality of monochromatic sub-pixels 210A in each of the plurality of combined pixels 21A to a same designated position, such as a focal point. Thus, since the light deflection modulation structure 30A is integrally formed with the color filter layer 20A in the filtering-based achromatic programmable optical device 1A of the present application, white light incident from either side of the filtering-based achromatic programmable optical device 1A can be subjected to light deflection modulation while eliminating chromatic aberration, achieving high-quality and clean imaging, and fully unleashing the potential of the filtering-based achromatic programmable optical device 1A in the white-light imaging industry.

In particular, as shown in FIG. 15, in the filtering-based achromatic programmable optical device 1A of the present application, light transmitted through all the combined pixels 21A may be converged simultaneously to the same designated position, such that the filtering-based achromatic programmable optical device 1A of the present application can completely replace the application of the conventional curved lenses in white-light imaging, and still has the advantages of small size and light weight.

Alternatively, in a second example of the present application, as shown in FIG. 16, light transmitted through different combined pixels 21A may be converged to different designated positions (such as different focal points) respectively, such that the filtering-based achromatic programmable optical device 1A of the present application can function as a conventional microlens array to satisfy requirements of corresponding imaging applications.

In addition, in a third example of the present application, as shown in FIG. 17, monochromatic light of the same color that has transmitted through the monochromatic sub-pixels 210A may be converged to the same designated position, so as to achieve a desired light programming effect.

Alternatively, as shown in FIG. 14 to FIG. 17, a thickness of the color filter layer 20A may be greater than a height or a depth of the light deflection modulation structure 30A, so as to form a filter substrate between the light deflection modulation structure 30A and the transparent substrate 10A, thereby ensuring that the color filter layer 20A effectively filters light, allowing only light of a specific color to pass through and blocking light of other colors.

Illustratively, the light-transmitting substrate 10A of the present application may be, but is not limited to, implemented as a glass substrate, a plastic substrate, a polymer material substrate, or the like, as long as light can be allowed to pass through, which will not be described in detail herein.

In addition, as shown in FIG. 14 to FIG. 17, the color filter layer 20A of the present application may be, but not limited to, implemented as an RGB color filter 200A. That is, each combination pixel 21A in the RGB color filter 200A may include a red sub-pixel 211A configured to selectively transmit red light, a green sub-pixel 212A configured to selectively transmit green light, and a blue sub-pixel 213A configured to selectively transmit blue light. It can be understood that as referred to in the present application, the red light may be in a wavelength band of 600 nm to 630 nm; the green light may be in a wavelength band of 500 nm to 600 nm; and the blue light may be in a wavelength band of 430 nm to 470 nm.

It should be noted that in other examples of the present application, the color filter layer 20A may also be implemented as a color filter of other color combinations, such as a color filter based on three secondary colors derived from red, yellow, and blue.

Alternatively, the RGB color filter 200A of the present application may be attached to a surface of the light-transmitting substrate 10A by processes such as lamination, coating, or deposition. It can be understood that the RGB color filter 200A of the present application may generally be a mixture of a pigment and a resin, which can selectively absorb light of two colors in RGB, and transmit light of one color in RGB. The process for fabricating the RGB filter layer 200A is very mature and is widely used in LCD displays in the liquid crystal display industry or CMOS image sensors in the imaging industry, which will not be described in detail herein. In addition, in the RGB color filter 200A of the present application, the transmittance and the transmission bandwidth of the monochromatic sub-pixel 210A may be adjustable, for example, by adjusting a concentration of the pigment or a thickness of the film layer.

Alternatively, to avoid diffraction interference between different monochromatic sub-pixels 210, the characteristic width of each of the plurality of monochromatic sub-pixels 210A in the present application may be required to be within the geometrical optics region. For example, the width of each monochromatic sub-pixel 110 may be greater than one hundred wavelengths of a corresponding monochromatic light. That is, the width of each monochromatic sub-pixel 210A may be greater than one hundred times the wavelength of the corresponding monochromatic light. It may be understood that the geometric optical region referred to in the present application means a size greater than one hundred times the wavelength.

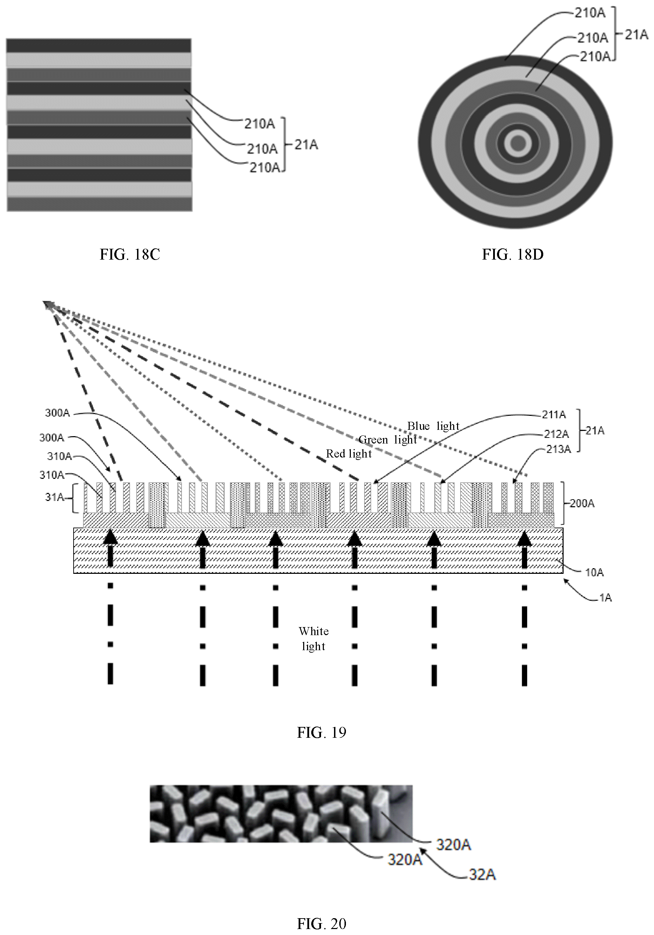

It should be noted that the shape of the combined pixel 21A may be, but is not limited to, implemented as a square as shown in FIG. 18A, a rectangle as shown in FIG. 18B and FIG. 18C, or a circular ring as shown in FIG. 18D. It can be understood that the combined pixel 21A of the present application may also be implemented in other shapes, as long as it can be ensured that each combined pixel 21A includes monochromatic sub-pixels 210A of different colors, which will not be described in detail herein.

According to the above embodiments of the present application, the light deflection modulation structure 30A of the present application may be, but is not limited to, implemented as an optical structure having a light deflection modulation function, such as a metasurface optical structure, a micro-geometric optical structure, or a diffractive optical structure. Each light deflection modulation unit 300A can be individually designed according to corresponding light deflection modulation requirements, such that all monochromatic light transmitted through each combined pixel 21A can be converged to a same point.

It should be noted that each light deflection modulation unit 300A in the metasurface optical structure of the present application can transmit the corresponding transmitted light ray to a designated position (such as a focal point), thereby eliminating chromatic aberration inherent in the metasurface.

Illustratively, in a first embodiment of the present application, as shown in FIG. 19, the light deflection modulation structure 30A may be configured as a transmission phase-type metasurface 31A provided in the color filter layer 20A, which facilitates metasurface optical imaging.

Alternatively, as shown in FIG. 19, each of the plurality of light deflection modulation units 300A in the transmission phase-type metasurface 31A may include a plurality of dielectric pillars 310A arranged periodically and having different widths, and each of the plurality of dielectric pillars 310A may have a characteristic dimension required to be in a sub-wavelength region. For example, the width of the dielectric pillar 310A may be less than half the wavelength of the corresponding monochromatic light, and the depth of the dielectric pillar 310A may be greater than the wavelength of the corresponding monochromatic light. It can be understood that the transmission phase-type metasurface 31A of the present application may have no requirement on the polarization state of light during light deflection modulation, and thus has a wide range of applicability.

In a second embodiment of the present application, as shown in FIG. 20, the light deflection modulation structure 30A may be configured as a geometric phase-type metasurface 32A provided in the color filter layer 20A, which facilitates metasurface optical imaging.

Alternatively, as shown in FIG. 20, each of the plurality of light deflection modulation units 300A in the geometric phase-type metasurface 32A may include a plurality of pillars 320A arranged in an array and having varying pointing angles, and each of the plurality of pillars 320A may have a characteristic width required to be within a sub-wavelength region. For example, the pillar 320A may be configured as a rectangular metal pillar and have a sub-wavelength rectangular cross-section. A height of the pillar 320A may be much greater than the wavelength of the corresponding monochromatic light. It can be understood that the equivalent refractive index (i.e., the average refractive index of the material and air) seen by light along a long side direction of the pillar 320A may be greater than the equivalent refractive index seen along a short side direction of the pillar 320A, such that the geometric phase-type metasurface 32A can be equivalent to an array of liquid crystals.

In addition, although the geometric phase-type metasurface 32A of the present application may be sensitive to the polarization state of light during light deflection modulation, when a half-wave condition $Δ n ∗ d = \frac{λ}{2}$ is satisfied, a wavefront of circularly polarized light can be modulated to satisfy the requirements of specific application scenarios.

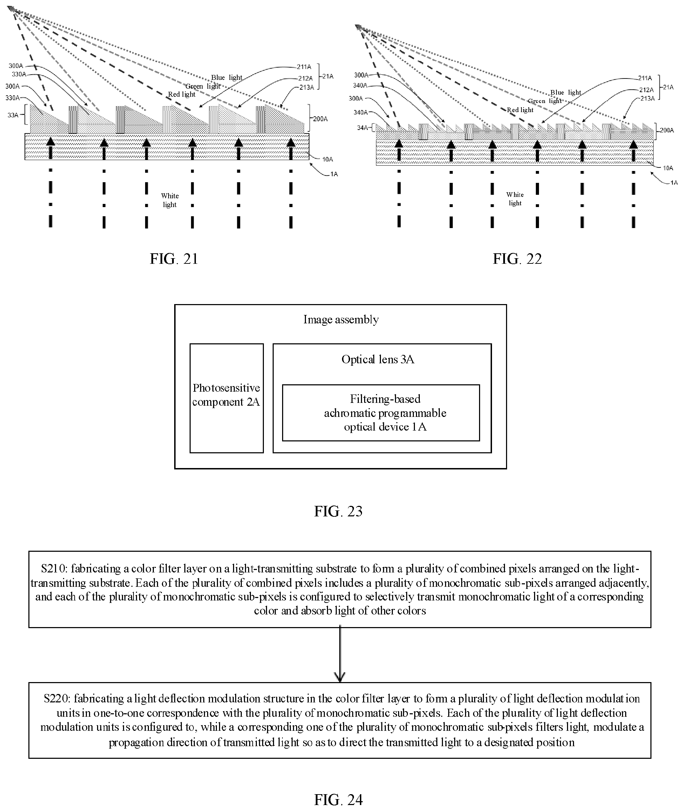

In a third embodiment of the present application, as shown in FIG. 21, the light deflection modulation structure 30A may be configured as a micro-geometric lens array 33A provided in the color filter layer 20A, to modulate the phase by refraction, thereby facilitating geometric optical imaging.

Alternatively, as shown in FIG. 21, the plurality of light deflection modulation units 300A in the micro-geometric lens array 33A may be, but is not limited to, configured as Fresnel lenses 330A in one-to-one correspondence with the plurality of monochromatic sub-pixels 210A. Thus, the geometric size of each Fresnel lens 330A may be comparable to the size of the monochromatic sub-pixel 210A, i.e., much greater than the wavelength. For example, the geometric size of each Fresnel lens 330A may be one hundred times the wavelength of the corresponding monochromatic light. It can be understood that each Fresnel lens 330A can be configured to refract corresponding transmitted light to a designated position (such as a focal point), thereby eliminating chromatic aberration existing in refractive optics.

In a fourth embodiment of the present application, as shown in FIG. 22, the light deflection modulation structure 30A may be configured as a diffraction grating array 34A provided in the color filter layer 20A to modulate the phase by diffraction, thereby facilitating the diffraction grating imaging.

Alternatively, as shown in FIG. 22, the plurality of light deflection modulation units 300A in the diffraction grating array 34A may be, but is not limited to, configured as relief gratings 340A in one-to-one correspondence with the monochromatic plurality of sub-pixels 210A. It can be understood that each relief grating 340A can operate at a certain diffraction order, and the relief grating 340A corresponding to the monochromatic sub-pixel 210A can diffract the corresponding transmitted light to a designated position such as a focal point, thereby eliminating chromatic aberration existing in diffraction optics. In addition, since the geometric size of the monochromatic sub-pixel 210A of the present application may be much greater than the wavelength, such as one hundred times the wavelength, the relief grating 340A corresponding to each monochromatic sub-pixel 210A as a whole may operate in the refractive optical region.

According to another aspect of the present application, as shown in FIG. 23, an imaging assembly is further provided in an embodiment of the present application. The imaging assembly may include a photosensitive component 2A and an optical lens 3A having the above filtering-based achromatic programmable optical device 1A. The optical lens 3A is located on a photosensitive side of the photosensitive component 2A, such that the filtering-based achromatic programmable optical device 1A can be used to replace a conventional lens, thereby achieving high-quality and clean white-light imaging.

It should be noted that the optical lens 3A referred to in the present application may include only the filtering-based achromatic programmable optical device 1A, or may include the filtering-based achromatic programmable optical device 1A and a conventional lens. Furthermore, in addition to being used in the imaging assembly for imaging modulation, the optical lens 3A referred to in the present application may also be applied in other scenarios such as an eyepiece or an objective lens in a microscope, which will not be described in detail herein.

According to another aspect of the present application, as shown in FIG. 24, a method for manufacturing a filtering-based achromatic optical device is further provided in an embodiment of the present application. The method includes step 210 and step 220.

Step 210 includes fabricating a color filter layer on a light-transmitting substrate to form a plurality of combined pixels arranged on the light-transmitting substrate. Each of the plurality of combined pixels includes a plurality of monochromatic sub-pixels arranged adjacently, and each of the plurality of monochromatic sub-pixels is configured to selectively transmit monochromatic light of a corresponding color and absorb light of other colors.

Step 220 includes fabricating a light deflection modulation structure in the color filter layer to form a plurality of light deflection modulation units in one-to-one correspondence with the plurality of monochromatic sub-pixels. Each of the plurality of light deflection modulation units is configured to, while a corresponding one of the plurality of monochromatic sub-pixels filters light, modulate a propagation direction of transmitted light so as to direct the transmitted light to a designated position.

It should be noted that, in the step 210 of the present application, an RGB color filter may be attached to a surface of the light-transmitting substrate by lamination, coating, or deposition process.

Alternatively, in the step 220 of the present application, one of a metasurface optical structure, a micro-geometric optical structure, or a diffractive optical structure may be fabricated in the color filter layer by a photolithography or nanoimprint lithography process.

Illustratively, when the nanoimprint lithography process is used to fabricate the metasurface optical structure, the process for fabricating the metasurface optical structure may include: first, coating photoresist on the surface of the color filter layer; imprinting with a mold to perform demolding after curing by light/heat; then, after removing residual photoresist, etching the color filter layer; finally, removing all photoresist to fabricate the metasurface optical structure in the color filter layer.

When the photolithography process is used to fabricate the metasurface optical structure, the process for fabricating the metasurface optical structure may include: first, coating photoresist on the surface of the color filter layer; then, performing exposure and development to form a photoresist mask; next, etching the color filter layer; finally, removing all the photoresist to fabricate the metasurface optical structure in the color filter layer.

The technical features of the above embodiments can be combined arbitrarily. In order to make the description concise, not all possible combinations of the technical features are described in the embodiments. However, as long as there is no contradiction in the combination of these technical features, the combinations should be considered as in the scope of the present application.

The above embodiments only express several implementations of the present application, and the description thereof is specific and detailed, but cannot be construed as limiting the scope of the present application. It should be noted that, for those skilled in the art, several modifications and improvements may be made without departing from the concept of the present application, which all fall within the protection scope of the present application. Therefore, the protection scope of the present application shall be defined by the appended claims.

## Claims

1. A filtering-based achromatic optical device, comprising a filter layer and a light deflection device, wherein
the filter layer comprises a plurality of combined pixels, and each of the plurality of combined pixels comprises a plurality of monochromatic sub-pixels arranged adjacently; each of the plurality of monochromatic sub-pixels is configured to selectively transmit monochromatic light of a corresponding color and absorb light of other colors; and
the light deflection device is attached to a surface of the filter layer and comprises a plurality of sub-light deflection devices in one-to-one correspondence with positions of the plurality of monochromatic sub-pixels, and each of the plurality of sub-light deflection devices is configured to adjust a propagation direction of the monochromatic light from a corresponding one of the plurality of monochromatic sub-pixels, so as to direct the monochromatic light to a designated position.

2. The filtering-based achromatic optical device of claim 1, wherein the light deflection device comprises at least one of a micro-prism, a grating, a transmissive holographic optical device, or a metasurface device.

3. The filtering-based achromatic optical device of claim 2, wherein the grating comprises at least one of a relief grating or a Pancharatnam-Berry (PB) grating.

4. The filtering-based achromatic optical device of claim 1, wherein the plurality of monochromatic sub-pixels corresponding to a same combined pixel among the plurality of combined pixels are of different light transmission types, and are configured to transmit light of different monochromatic colors, respectively.

5. The filtering-based achromatic optical device of claim 1, wherein the filter layer is configured as an RGB filter layer; each of the plurality of combined pixels in the RGB filter layer comprises a red sub-pixel configured to selectively transmit red light, a green sub-pixel configured to selectively transmit green light, and a blue sub-pixel configured to selectively transmit blue light.

6. The filtering-based achromatic optical device of claim 1, wherein each of the plurality of monochromatic sub-pixels has a characteristic width within a geometric optical region.

7. The filtering-based achromatic optical device of claim 1, wherein a shape of each of the plurality of combined pixels comprises at least one of a square, a rectangle, or a circular ring.

8. The filtering-based achromatic optical device of claim 1, wherein the light deflection device is configured to converge the monochromatic light from all of the plurality of monochromatic sub-pixels that has transmitted through the filter layer to a same designated position.

9. The filtering-based achromatic optical device of claim 1, wherein the light deflection device is configured to converge the monochromatic light from the plurality of monochromatic sub-pixels corresponding to a same combined pixel among the plurality of combined pixels to a same designated position; and different combined pixels correspond to different designated positions.

10. An optical lens, comprising a filtering-based achromatic optical device, wherein the filtering-based achromatic optical device comprises a filter layer and a light deflection device;
the filter layer comprises a plurality of combined pixels, and each of the plurality of combined pixels comprises a plurality of monochromatic sub-pixels arranged adjacently; each of the plurality of monochromatic sub-pixels is configured to selectively transmit monochromatic light of a corresponding color and absorb light of other colors; and
the light deflection device is attached to a surface of the filter layer and comprises a plurality of sub-light deflection devices in one-to-one correspondence with positions of the plurality of monochromatic sub-pixels, and each of the plurality of sub-light deflection devices is configured to adjust a propagation direction of the monochromatic light from a corresponding one of the plurality of monochromatic sub-pixels, so as to direct the monochromatic light to a designated position.

11. An imaging assembly, comprising: a photosensitive component and an optical lens, wherein the optical lens is located on a photosensitive side of the photosensitive component; the optical lens comprises a filtering-based achromatic optical device, and the filtering-based achromatic optical device comprises a filter layer and a light deflection device;
the filter layer comprises a plurality of combined pixels, and each of the plurality of combined pixels comprises a plurality of monochromatic sub-pixels arranged adjacently; each of the plurality of monochromatic sub-pixels is configured to selectively transmit monochromatic light of a corresponding color and absorb light of other colors;
the light deflection device is attached to a surface of the filter layer and comprises a plurality of sub-light deflection devices in one-to-one correspondence with positions of the plurality of monochromatic sub-pixels, and each of the plurality of sub-light deflection devices is configured to adjust a propagation direction of the monochromatic light from a corresponding one of the plurality of monochromatic sub-pixels, so as to direct the monochromatic light to a designated position.

12. A filtering-based achromatic optical device, comprising a light-transmitting substrate, a color filter layer, and a light deflection modulation structure, wherein
the color filter layer is attached to the light-transmitting substrate, and comprises a plurality of combined pixels arranged on the light-transmitting substrate, each of the plurality of combined pixels comprises a plurality of monochromatic sub-pixels arranged adjacently; each of the plurality of monochromatic sub-pixels is configured to selectively transmit monochromatic light of a corresponding color and absorb light of other colors; and
the light deflection modulation structure is integrally formed with the color filter layer, comprises a plurality of light deflection modulation units in one-to-one correspondence with the plurality of monochromatic sub-pixels, and each of the plurality of light deflection modulation units is configured to, while a corresponding one of the plurality of monochromatic sub-pixels filters light, modulate a propagation direction of transmitted light, so as to direct the transmitted light to a designated position.

13. The filtering-based achromatic optical device of claim 12, wherein the plurality of monochromatic sub-pixels in each of the plurality of combined pixels have different colors, and the light deflection modulation structure is configured to converge the monochromatic light that has transmitted through all of the plurality of monochromatic sub-pixels in each of the plurality of combined pixels to a same designated position.

14. The filtering-based achromatic optical device of claim 12, wherein the plurality of monochromatic sub-pixels in each of the plurality of combined pixels have different colors, and the light deflection modulation structure is configured to converge the monochromatic light of a same color that has transmitted through the plurality of monochromatic sub-pixels to a same designated position.

15. The filtering-based achromatic optical device of claim 12, wherein the color filter layer is configured as an RGB color filter; each of the plurality of combined pixels in the RGB color filter comprises a red sub-pixel configured to selectively transmit red light, a green sub-pixel configured to selectively transmit green light, and a blue sub-pixel configured to selectively transmit blue light.

16. The filtering-based achromatic optical device of claim 12, wherein each of the plurality of monochromatic sub-pixels has a characteristic width required to be within a geometric optical region.

17. The filtering-based achromatic optical device of claim 12, wherein a shape of each of the plurality of combined pixels comprises at least one of a square, a rectangle, or a circular ring.

18. The filtering-based achromatic optical device of claim 12, wherein a thickness of the color filter layer is greater than a height or a depth of the light deflection modulation structure, so as to form a filter substrate between the light deflection modulation structure and the light-transmitting substrate.

19. The filtering-based achromatic optical device of any one of claims 12 to 18, wherein the light deflection modulation structure is configured as one of a metasurface optical structure, a micro-geometric optical structure, or a diffractive optical structure.

20. The filtering-based achromatic optical device of any one of claims 12 to 18, wherein the light deflection modulation structure is configured as a transmission phase-type metasurface provided in the color filter layer; and each of the plurality of light deflection modulation units in the transmission phase-type metasurface comprises a plurality of dielectric pillars arranged periodically and having different widths, and each of the plurality of dielectric pillars has a characteristic dimension required to be within a sub-wavelength region.

21. The filtering-based achromatic optical device of any one of claims 12 to 18, wherein the light deflection modulation structure is configured as a geometric phase-type metasurface provided in the color filter layer; and each of the plurality of light deflection modulation units in the geometric phase-type metasurface comprises a plurality of pillars arranged in an array and having varying orientation angles, and each of the plurality of pillars has a characteristic width required to be within a sub-wavelength region.

22. The filtering-based achromatic optical device of any one of claims 12 to 18, wherein the light deflection modulation structure is configured as a micro-geometric lens array provided in the color filter layer; and the plurality of light deflection modulation units in the micro-geometric lens array are configured as Fresnel lenses in one-to-one correspondence with the plurality of monochromatic sub-pixels.

23. The filtering-based achromatic optical device of any one of claims 12 to 18, wherein the light deflection modulation structure is configured as a diffraction grating array provided in the color filter layer; and the plurality of light deflection modulation units in the diffraction grating array are configured as relief gratings in one-to-one correspondence with the plurality of monochromatic sub-pixels.

24. An optical lens, comprising a filtering-based achromatic optical device, wherein the filtering-based achromatic optical device comprises a light-transmitting substrate, a color filter layer, and a light deflection modulation structure, wherein
the color filter layer is attached to the light-transmitting substrate, and comprises a plurality of combined pixels arranged on the light-transmitting substrate, each of the plurality of combined pixels comprises a plurality of monochromatic sub-pixels arranged adjacently; each of the plurality of monochromatic sub-pixels is configured to selectively transmit monochromatic light of a corresponding color and absorb light of other colors; and
the light deflection modulation structure is integrally formed with the color filter layer, comprises a plurality of light deflection modulation units in one-to-one correspondence with the plurality of monochromatic sub-pixels, and each of the plurality of light deflection modulation units is configured to, while a corresponding one of the plurality of monochromatic sub-pixels filters light, modulate a propagation direction of transmitted light so as to direct the transmitted light to a designated position.

25. An imaging assembly, comprising:
a photosensitive component; and
an optical lens located on a photosensitive side of the photosensitive component, wherein the optical lens comprises a filtering-based achromatic optical device, and the filtering-based achromatic optical device comprises a light-transmitting substrate, a color filter layer, and a light deflection modulation structure, wherein
the color filter layer is attached to the light-transmitting substrate, and comprises a plurality of combined pixels arranged on the light-transmitting substrate, each of the plurality of combined pixels comprises a plurality of monochromatic sub-pixels arranged adjacently; each of the plurality of monochromatic sub-pixels is configured to selectively transmit monochromatic light of a corresponding color and absorb light of other colors; and
the light deflection modulation structure is integrally formed with the color filter layer, comprises a plurality of light deflection modulation units in one-to-one correspondence with the plurality of monochromatic sub-pixels, and each of the plurality of light deflection modulation units is configured to, while a corresponding one of the plurality of monochromatic sub-pixels filters light, modulate a propagation direction of transmitted light so as to direct the transmitted light to a designated position.

26. A method for manufacturing a filtering-based achromatic optical device, comprising:
fabricating a color filter layer on a light-transmitting substrate to form a plurality of combined pixels arranged on the light-transmitting substrate, wherein each of the plurality of combined pixels comprises a plurality of monochromatic sub-pixels arranged adjacently, and each of the plurality of monochromatic sub-pixels is configured to selectively transmit monochromatic light of a corresponding color and absorb light of other colors; and
fabricating a light deflection modulation structure in the color filter layer to form a plurality of light deflection modulation units in one-to-one correspondence with the plurality of monochromatic sub-pixels, and each of the plurality of light deflection modulation units is configured to, while a corresponding one of the plurality of monochromatic sub-pixels filters light, modulate a propagation direction of transmitted light so as to direct the transmitted light to a designated position.

27. The method for manufacturing the filtering-based achromatic optical device of claim 26, wherein fabricating the color filter layer on the light-transmitting substrate further comprises: attaching an RGB color filter to the light-transmitting substrate, by lamination, coating, or deposition process.

28. The method for manufacturing the filtering-based achromatic optical device of claims 26 or 27, wherein fabricating the light deflection modulation structure in the color filter layer further comprises: fabricating one of a metasurface optical structure, a micro-geometric optical structure, or a diffractive optical structure in the color filter layer by a photolithography or nanoimprint lithography process.
